# EUROPEAN PATENT SPECIFICATION

(11) **EP 0 544 782 B1**
(45) Date of publication and mention of the grant of the patent: **15.11.1995**
(21) Application number: 91915660.4
(22) Date of filing: 15.08.1991
(51) Int. Cl.: A01N 47/36, A01N 43/88

(54) **A HERBICIDAL COMPOSITION FOR PADDY FIELD**
HERBIZIDZUSAMMENSETZUNG FÜR REISFELD
COMPOSITION HERBICIDE POUR RIZIERE

(30) Priority: 23.08.1990 JP 220153/90
(43) Date of publication of application: 09.06.1993
(73) Proprietor: E.I. DU PONT DE NEMOURS AND COMPANY, Wilmington Delaware 19898 (US)
(72) Inventor: TSURUBUCHI, Yuji, Tsukuba-shi, Ibaragi-ken 305 (JP)
(74) Representative: Hildyard, Edward Martin
(86) International application number: US9105590
(87) International publication number: WO9203054

(56) References cited:
- EP-A- 0 303 383
- DE-A- 1 542 836
- FR-A- 2 609 373
- PATENT ABSTRACTS OF JAPAN, vol. 8, no. 241, C250, July 14, 1984; & JP-A-59 122 488
- PATENT ABSTRACTS OF JAPAN, vol. 8, no. 106, C223, February 01, 1984; & JP-A-59 20 206

## Description

### BACKGROUND OF THE INVENTION

This invention relates to a herbicidal composition comprising two active herbicides for use in paddy rice fields.

New compounds or compositions effective for controlling the growth of undesired vegetation in a rice crop are in constant demand. Unchecked weed growth in such crops can cause significant losses, reducing profit to the farmer and increasing costs to the consumer. There is also a constant demand for compositions which are useful in controlling the growth of undesired vegetation in a rice crop without any or minimal effect on the rice crop. There are such products available commercially but the search continues for products which are more effective, less costly, environmentally safe and safe on the rice crop.

The "sulfonylurea" herbicides are an extremely potent class of herbicides discovered within the last few years which generally consist of a sulfonylurea bridge, -SO₂NHCONH-, linking two aromatic or heteroaromatic rings containing substituents.

### SUMMARY OF THE INVENTION

This invention relates to a herbicidal composition for paddy field. More specifically, the invention relates to a herbicidal composition for paddy field which exhibits outstanding herbicidal effect on paddy field weeds with a broad spectrum against noxious weeds in general, including both annual and perennial weeds and with equal effectiveness against the weeds of early growth stage as well as of considerably advanced growth stage, viz., having markedly prolonged applicable period and which furthermore exhibits high safety to rice plants.

Presently a large number of herbicides for paddy field are commercially available which are widely and commonly used either singly or in combination. However, paddy field weeds are quite versatile including annual and perennial species, and those of differing growth stages are concurrently present within a same field. While there are many herbicides known to be effective for controlling annual weeds, those effective for killing perennial weeds are relatively few. For this reason perennial weeds have been proliferating and their effective control is in strong demand.

Perennial weeds generally show vigorous growth, have long terms of vegetation and are very noxious. Therefore as perennial weed-controlling herbicides those of broad herbicidal spectra capable of killing many weed species are desirable.

Recent rapidly increasing introduction of mechanical means into paddy rice plant cultivation and expedited transplantation create environments more suitable for weed growth than ever, and it has become increasingly difficult to expect a complete weed-controlling effect from single herbicide application.

Unless the many species of the paddy field weeds are controlled as completely as possible in an occasion of applying a herbicide or herbicides, the survived weeds would thickly grow to interfere with rice plant growth and the intended weed controlling effect cannot be accomplished, calling for application of still other herbicides.

We noted those problems and with the view to improve conventional herbicides, engaged in continual search for a herbicide which can perfectly control annual and perennial weeds, is highly safe to paddy rice plant and exhibits very low toxicity to men and beasts. Consequently we came to discover that by blending certain two kinds of active ingredients, an excellent herbicidal composition providing solutions to aforesaid problem could be obtained, and thus completed the present invention.

Accordingly, therefore, the present invention provides herbicidal composition for paddy field use, which contains as the effective ingredients a compound expressed by formula (1) below, 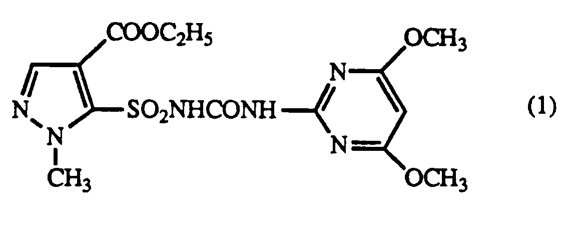
and a compound expressed by formula (2) below 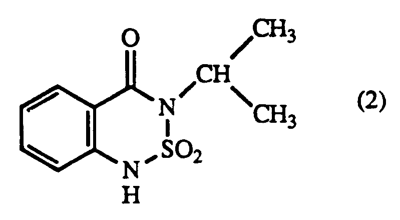
or an agriculturally and horticulturally acceptable salt thereof.

Hereinafter the herbicidal composition of the present invention will be explained in further details.

The compound of formula (1) which is one of the active ingredients of the herbicidal composition of the present invention, viz., ethyl 5-[3-(4,6-dimethoxypyrimidine-2-yl)ureid sulfonyl]-1-methylpyrazole-4-carboxylate, is a known herbicide which is often referred to as "pyrazosulflonethyl". This herbicide shows high herbicidal activity on early growth stage of annual broad-leaf weeds and Cyperaceae, and such perennial weeds as Scirpus hotarui, Eleocharis acicularis, Cyperus serotinus, Sagittaria pygmaea, etc. of which proliferation in these years has been attracting attention. At normal application rates the compound exhibits relatively low phytotoxicity on paddy rice plant, but it has a deficiency in that it shows less effect on those weeds of advanced growth stage.

Whereas, the compound of formula (2), 3-isopropyl-2,1,3-benzothiadiazinone-(4)-2,2-dioxide or a salt thereof, for example, a sodium salt, is a known herbicidally active compound generally referred to as "bentazone", which is highly active against broad leaf weeds at large and perennial weeds such as Scirpus hotarui, Cyperus serotinus, Eleocharis kuroguwai and Sagittaria trifolia, etc., while exhibiting no phytotoxicity against paddy rice plant at normal application rates. The compound however has little controlling effect on Graminaceous weeds and furthermore becomes less effective as weed growth advances. Still another defect of this compound is that it exhibits only insufficient effect against such perennial weeds as Sagittaria pygmaea, Cyperus serotinus, etc., when applied in ordinary flooding treatment, but surface drainage is necessary for its exhibiting a sufficient effect.

Nevertheless, when the compounds of formulae (1) and (2) were used concurrently and the resulting weed control and phytotoxicity, etc. were investigated, quite surprisingly the two worked synergistically and a markedly broadened herbicidal spectrum beyond the application ranges of either one of them was obtained with ordinary flooding treatment. That is, the herbicidal composition exhibited remarkable herbicidal effect on annual Cyperaceae and broad leaf weeds as well as perennial weeds at large such as Scirpus hotarui, Cyperus serotinus and Sagittaria pygmaea, etc. Furthermore it effectively controlled those weeds not only during their early growth stage, but at advanced growth stages as well, allowing drastically prolonged application period. It was also found that it is highly safe to paddy rice plant.

The herbicidal composition of the present invention sufficiently exhibits its effect using the active ingredients at lower rates of application than those required when they are applied each independently of the other. Still more, the composition achieves satisfactory control of those weeds as named above by one time application, and the effect is durable. Thus it is proven to be very useful as a herbicidal composition for paddy field.

The blend ratio of the compound of formula (1) and that of formula (2) in the composition of this invention is variable within a range not substantially impairing the excellent paddy field weed-controlling effect and the safety of paddy field rice plant, according to the formulation form of the composition and the herbicidal efficacy expected thereof. Normally they can be combined at weight ratios of compound of formula (1) to that of formula (2), ranging from 1/50 to 1/300, preferably from 1/200 to 1/300.

The composition of the present invention can be formulated into such conventionally used preparation forms of herbicide for actual use, together with solid or liquid carriers or diluents and if necessary other adjuvants normally used in the field of agricultural chemicals, as dust, granule, pellet, wettable powder, emulsion, suspension, concentrate, aerosol, solution, etc. In such preparation forms, the content of sum of the compounds of formulae (1) and (2) can normally range from about 0.01 - about 100% by weight, preferably from about 0.1 - about 90% by weight.

Solid carriers or diluents useful in the occasion of formulating the composition of the present invention include clays typical of which are kaolinite, montmorillonite and attapulgite; inorganic substances such as talc, mica, pyrophyllite, pumice, vermiculite, gypsum, calcium carbonate, dolomite, diatomaceous earth, magnesium lime, phosphorus lime, zeolite, silicon anhydride and synthetic calcium silicate; vegetable organic substances such as soybean powder, tobacco powder, walnut powder, wheat flour, wood flour, starch and crystalline cellulose; synthesized and natural high molecular weight substances such as coumarone resin, petroleum resin, alkyd resin, polyvinyl chloride, polyalkylene glycol, keton resin, ester gum, copal gum and gum dammer; waxes such as carnauba wax and beeswax; and urea.

Suitable liquid carriers or diluents include paraffinic or naphthenic hydrocarbons such as kerosine, mineral oil, spindle oil and white oil; aromatic hydrocarbons such as benzene, toluene, xylene, ethylbenzene, cumene, methylnaphthalene; chlorinated hydrocarbons such as carbon tetrachloride, chloroform, trichloroethylene, monochlorobenzene, o-chlorotoluene, etc.,; ethers such as dioxane, tetrahydrofuran; ketones such as acetone, methyl ethyl ketone, diisobutyl ketone, cyclohexanone, acetophenone and isophorone; esters such as ethyl acetate, amyl acetate, ethylene glycol acetate, diethylene glycol acetate, dibutyl maleate and diethyl succinate; alcohols such as methanol, n-hexanol, ethylene glycol, diethylene glycol, cyclohexanol and benzyl alcohol; ether alcohols such as ethylene glycol ethyl ether, ethylene glycol phenyl ether, diethylene glycol ethyl ether and diethylene glycol butyl ether; polar solvents such as dimethylformamide and dimethylsulfoxide, and water.

As other adjuvants, surfactants can be used for such purposes as emulsifying, dispersing, wetting, extending, combining, degradation regulating, stabilization of effective ingredients, fluidability improvement, rust-proofing, etc., which may be non-ionic, anionic, cationic or amphoteric, but normally non-ionic and/or anionic surfactants are used. Suitable non-ionic surfactants include polymerization adducts of ethylene oxide to higher alcohols such as lauryl alcohol, stearyl alcohol and oleyl alcohol; polymerization adducts of ethylene oxide to alkyl phenols such as isooctyl phenol and nonyl phenol; polymerization adducts of ethylene oxide to alkyl naphthol such as butyl naphthol and octyl naphthol; polymerization adducts of ethylene oxide to higher fatty acids such as palmitic acid, stearic acid and oleic acid; polymerization adducts of ethylene oxide to mono- or di-alkyl-phosphoric acids such as stearyl phosphoric acid and dilauryl phosphoric acid; polymerization adducts of ethylene oxide to amines such as dodecyl amine and stearyl amine; higher fatty acid esters of polyhydric alcohols such as sorbitol, and polymerization adducts thereof with ethylene oxide; and polymerization adducts of ethylene oxide and propylene oxide. Examples of suitable anionic surfactants include alkyl sulfates such as sodium lauryl sulfate, amine salt of oleyl alcohol sulfate; alkyl sulfonates such as sodium dioctylsulfosuccinate and sodium 2-ethylhexenesulfonate; and aryl sulfonates such as sodium isopropylnaphthalene sulfonate, sodium methylene-bis-naphthalene sulfonate, sodium ligninesulfonate and sodium dodecylbenzenesulfonate.

The herbicidal composition of the present invention may also optionally be used concurrently with high molecular weight compounds such as casein, gelatin, albumin, glue, sodium alginate, carboxymethyl cellulose, methyl cellulose, hydroxyethyl cellulose, polyvinyl alcohol, etc., and other adjuvants, with the view to improve properties of the formulations and increase biological effects.

Above carriers or diluents and various adjuvants are optionally used either singly or in combination depending on individual purpose, taking such factors into consideration as the form of preparations and situations of their application.

Among those preparations, a dust contains, for example a total of normally 5-10 parts by weight of 1:200 (weight ratio) mixture of the compounds of formula (1) and formula (2) (Na salt) as the active ingredient, the balance being a solid carrier or a diluent. Also a wettable powder normally contains 50-80 parts by weight in total of for example 1:200 (weight ratio) mixture of compounds of formula (1) and formula (2) (Na salt) as the active ingredient, the balance being a solid carrier or a diluent and a dispersing and wetting agent. If required, the powder may further contain a protective colloid, thixotropic agent, defoaming agent, etc. Pellets normally contain 3 to 15 parts by weight in total of a mixture of, for example, 1:200 (weight ratio) of formula (1) compound and formula (2) compound (Na salt), the balance being mostly a solid carrier or a diluent. In this case the active compounds may be uniformly mixed with the solid carrier or a diluent or uniformly deposited or adsorbed on the surfaces of the solid carrier or diluent. The pellets may have the diameters ranging from about 0.2 to 1.5 mm.

The composition of the present invention may suitably be blended with agriculturally acceptable other chemical agents, such as insecticides, germicides, plant growth regulating agent, fertilizers and other herbicides.

While the herbicidal composition of the present invention can be used for a pre-emergence treatment of weeds in flooded paddy field, normally it exhibits particularly excellent effects in flooding treatments at post-emergence stage of the weeds. Its application time can be suitably selected depending of the condition of paddy rice cultivating area, rice plant species, weed species and condition of their growth, weather, etc. Applications immediately before or after transplantation of rice plant seedlings however can have undesirable effect on the seedlings, while those at an exceedingly late stage would reduce the herbicidal effect on the paddy field weeds. Therefore it is normally preferred to apply the composition to the surface of the water flooding the paddy field within a period around 7 to 45 days, more preferably around 10 to 40 days, after transplantation of rice plant seedlings (rice-planting). In that occasion, the composition may stay on the leaves of rice plant (seedlings) to some extent without any detrimental effect.

While normally the compounds of formulae (1) and (2) are formulated into preparations as aforesaid, it is permissible as occasion demands to mix in situ herbicides each containing formula (1) and (2) compounds separately, for their concurrent application. Or, such herbicides may be applied separately but approximately simultaneously to effect their concurrent application.

The application rate of the herbicidal composition of the present invention can be suitably adjusted depending on such conditions as the nature and conditions of the paddy field soil, natural conditions, locality, rice plant species, etc. Normally however the composition can be applied at such a rate that the sum of the formula (1) and formula (2) compounds would become about 1500 - about 3000 g/ha, preferably about 2000 - about 2900 g/ha, particularly about 2300 - about 2800 g/ha.

As aforesaid, the composition of the present invention can effectively kill annual and perennial weed species with a broad herbicidal spectrum, without exhibiting any extent of phytotoxicity on paddy rice plants. Examples of controllable perennial paddy field weeds include Sagittaria pygmaea, Sagittaria trifolia, Scirpus hotarui, Cyperus serontinus, Eleocharis acicularis, and Eleocharis kuroguwai, etc. Examples of controllable annual paddy field weeds include Cyperus difformis, Monochoria vaginalis, Rotala indica, Lindernia procubens, Dopatrium junceum, Elatine triandra, etc.

Hereinafter the present invention will be more specifically explained referring to Test Examples and Formulation Examples.

### TEST EXAMPLES

### Herbicidal effect and phytotoxicity on paddy rice plant by pot test in a greenhouse:

Wagner pots of each 1/5000 are with 4-cm thick sponge sheet laid on the bottom were filled with 1.8 liters of paddy field soil (light soil) and flooded, followed by dressing and paddling. Then rice plant (specie: Nihon-bare, 2.1-2.2 leaf-stage) and weed tubers were transplanted into the pots and weed seeds were sown. Thereafter the depth of the flooding water was maintained at 3 cm. For the purpose of phytotoxicity test pelletized preparations of the formula (1) compound and formula (2) compound (Na salt), respectively, were applied individually or simultaneously onto the water surface, on the 10th day after the transplantation and sowing, and for efficacy test, they were applied on the 23rd day. After herbicidal treatments, water leakage at a flooding water-decrease rate of 2 cm per day was caused for three days continuously. The efficacy test was repeated twice per lot, and the phytoxicity test, three times per lot. On the 15th day after the single or concurrent application of the compounds of formula (1) and/or formula (2) the phytotoxicity was examined, and their herbicidal effect, on the 35th day. The herbicidal effect was evaluated by visual observation according to the below-identified rating system in which 10 indicates complete kill and 0, no effect. The phytotoxicity was judged by an overall observation taking the glass height, dry weight of terrestrial parts of the glasses, etc. into consideration.

Evaluation of herbicidal effect (observation) (Grade).

| | | |
|---|---|---|
| 0: | amount of residual weeds, compared to that of untreated lot | 90 - 100% |
| 1: | amount of residual weeds, compared to that of untreated lot | 80 - 90% |
| 2: | amount of residual weeds, compared to that of untreated lot | 70 - 80% |
| 3: | amount of residual weeds, compared to that of untreated lot | 60 - 70% |
| 4: | amount of residual weeds, compared to that of untreated lot | 50 - 60% |
| 5: | amount of residual weeds, compared to that of untreated lot | 40 - 50% |
| 6: | amount of residual weeds, compared to that of untreated lot | 30 - 40% |
| 7: | amount of residual weeds, compared to that of untreated lot | 20 - 30% |
| 8: | amount of residual weeds, compared to that of untreated lot | 10 - 20% |
| 8.5: | amount of residual weeds, compared to that of untreated lot | 5 - 10% |
| 9: | amount of residual weeds, compared to that of untreated lot | 2.5 - 5% |
| 9.5: | amount of residual weeds, compared to that of untreated lot | 2 - 2.5% |
| 10: | amount of residual weeds, compared to that of untreated lot | 0% |

The results are shown in Table 1 below:

**TABLE 1**

| Compound(s) Used | Application Rate of Effective Ingredient (g/a) | Cd | Mv | Sh | Sp | Cs | Phytotoxicity to Rice Plant (Observation) |
|---|---|---|---|---|---|---|---|
| Compound of formula (1) | 0.105 | 5 | 8.5 | 7 | 6 | 4 | none |
| | 0.21 | 8 | 9 | 9 | 7 | 8 | none |
| Compound of formula (2) (sodium salt) | 15 | 0 | 2 | 2 | 9 | 6 | none |
| | 21 | 5 | 5 | 4 | 9 | 10 | none |
| | 30 | 5 | 3 | 3 | 9 | 10 | none |
| Compound of formula (1) + Compound of formula (2) | 0.105 + 15 | 8 | 9 | 8.5 | 8 | 7 | none |
| | 0.105 + 21 | 8.5 | 8.5 | 9 | 8 | 9 | none |
| | 0.105 + 30 | 9 | 9 | 9 | 9.8 | 10 | none |
| | 0.21 + 30 | 9 | 9 | 9 | 9.8 | 10 | none |

The abbreviations for weed species given in the above table correspond to the following:
Cd: Cyperus difformis
Mv: Monochoria vaginalis
Sh: Scirpus hotarui
Sp: Sagittaria pygmaea
Cs: Cyperus serotinus

As can be understood from the above table, the compound of formula (1) exhibited high activity particularly against Monochoria vaginalis and Scirpus hotarui when used at a normal application rate, but when the rate was reduced to a half the drop in its herbicidal activity on all weed species except Monochoria vaginalis was conspicuous.

Whereas, the compound of formula (2) showed only insufficient controlling effect on Cyperus difformis, Monochoria vaginalis and Scirpus hotarui even when used at a normal application rate, in the present experiments conducted under flooded condition.

In contrast to their individual applications as above, when the compounds of formulae (1) and (2) were applied simultaneously, stable herbicidal activity was obtained on all of the weed species, while no phytotoxicity was observed.

### Formulation Example 1 (wettable powder):

Fifty (50) parts of a mixture of formula (1) compound and formula (2) compound (Na salt) (blend ratio = 1:200 by weight), 2.5 parts of dodecylbenzene sulfonate, 2.5 parts of lignin sulfonate and 45 parts of diatomaceous earth, the parts being by weight, were together ground and mixed well to provide a wettable powder.

### Formulation Example 2 (pellets):

Seven (7) parts of a mixture of formula (1) compound and formula (2) compound (Na salt) (blend ratio = 1:200 by weight), 3 parts of white carbon, 5 parts of lignin sulfonate and 85 parts of clay, the parts being by weight, were together ground and mixed well, further kneaded well with water, pelletized and dried to provide a pellet formulation.

## Claims

1. A herbicidal composition for paddy field which contains, as the active ingredients, a compound expressed by formula (1) below 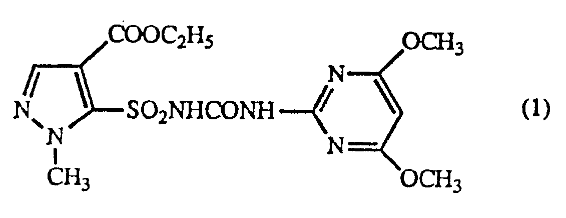 and a compound expressed by the formula (2) below 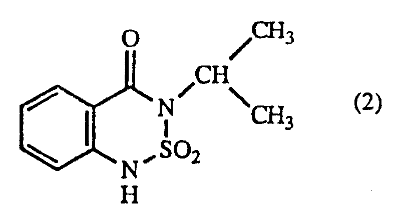 or an agriculturally and horticulturally acceptable salt thereof.

2. A composition according to claim 1, comprising the compounds of formulae (1) and (2) in a weight ratio in the range 1/50 to 1/300.

3. A composition according to claim 2, wherein said ratio is in the range 1/200 to 1/300.

4. A process for preparing the herbicidal composition of claim 1 which requires admixing said compound of formula (1) with said compound of formula (2), together with solid or liquid carriers or diluents.

5. A process according to claim 4, wherein the weight ratios of said compounds of formulae (1) and (2) are as defined in claim 2 or claim 3.

6. A method for controlling the growth of undesired vegetation in a paddy field which comprises applying concurrently to said paddy field effective amounts of compounds of formulae (1) and (2) as defined in claim 1.

7. A method according to claim 6, wherein the weight ratio of said compounds is as defined in claim 2 or claim 3.

8. A method according to claim 7, wherein the sum of the weights of said compounds of formulae (1) and (2) is in the range from 1500 to 3000 g/ha.

9. A method according to claim 8, wherein said sum is in the range from 2300 to 2800 g/ha.

10. A method of any one of claims 6 to 9, wherein said compounds of formulae (1) and (2) are applied separately but approximately simultaneously to effect their concurrent application.

## Patentansprüche

1. Reisfeld-Herbizidzusammensetzung, die als aktive Bestandteile eine Verbindung, ausgedrückt durch Formel (1) nachstehend 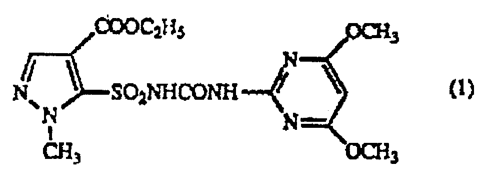 und eine Verbindung, ausgedrückt durch Formel (2) nachstehend 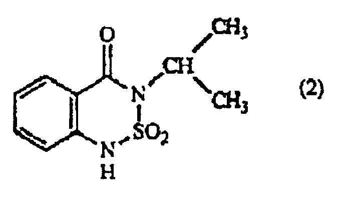 oder ein für Landwirtschaft und Gartenkultur verträgliches Salz davon enthält.

2. Verbindung nach Anspruch 1, umfassend die Verbindungen der Formeln (1) und (2) in einem Gewichtsverhältnis im Bereich von 1/50 zu 1/300.

3. Zusammensetzung nach Anspruch 2, worin das genannte Verhältnis im Bereich von 1/200 bis 1/300 liegt.

4. Verfahren zur Herstellung der Herbizidzusammensetzung nach Anspruch 1, welches das Vermischen der genannten Verbindung der Formel (1) mit der genannten Verbindung der Formel (2) zusammen mit festen oder flüssigen Trägerstoffen oder Verdünnungsmitteln erfordert.

5. Verfahren nach Anspruch 4, bei dem die Gewichtsverhältnisse der genannten Verbindungen der Formeln (1) und (2) so sind wie definiert in Anspruch 2 oder 3.

6. Verfahren zur Kontrolle des Wachstums von unerwünschter Vegetation in einem Reisfeld, welches umfaßt das gleichzeitige Ausbringen auf das genannte Reisfeld von wirksamen Mengen der Verbindungen der Formeln (1) und (2) nach Anspruch 1.

7. Verfahren nach Anspruch 6, bei dem das Gewichtsverhältnis der genannten Verbindungen so ist wie definiert in Anspruch 2 oder 3.

8. Verfahren nach Anspruch 7, bei dem die Summe der Gewichte der genannten Verbindungen der Formeln (1) und (2) im Bereich von 1500 bis 3000 g/ha liegt.

9. Verfahren nach Anspruch 8, bei dem die genannte Summe im Bereich von 2300 bis 2800 g/ha liegt.

10. Verfahren nach einem der Ansprüche 6 bis 9, bei dem die genannten Verbindungen der Formeln (1) und (2) getrennt, jedoch nahezu gleichzeitig ausgebracht werden, um ihr gemeinsames Ausbringen zu bewirken.

## Revendications

1. Une composition herbicide pour rizière, qui contient, comme ingrédients actifs, un composé représenté par la formule (1) ci-dessous 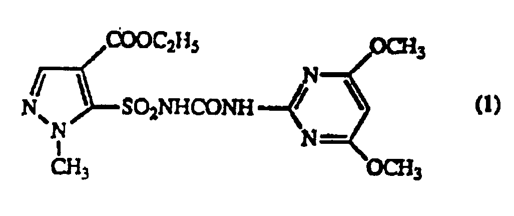 et un composé représenté par la formule (2) ci-dessous 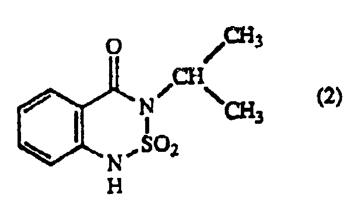 ou un sel acceptable pour l'usage agricole et horticole de celui-ci.

2. Une composition selon la revendication 1, comprenant les composés de formules (1) et (2) en un rapport en poids compris dans l'intervalle de 1/50 à 1/300.

3. Une composition selon la revendication 2, dans laquelle ledit rapport se situe dans l'intervalle de 1/200 à 1/300.

4. Un procédé pour préparer la composition herbicide de la revendication 1, qui implique de mélanger ledit composé de formule (1) avec ledit composé de formule (2), ainsi qu'avec des supports ou diluants solides ou liquides.

5. Un procédé selon la revendication 4, dans lequel les rapports en poids desdits composés de formules (1) et (2) sont tels que définis dans la revendication 2 ou la revendication 3.

6. Une méthode pour combattre la croissance d'une végétation indésirable dans une rizière, qui consiste à appliquer concomitamment à ladite rizière des quantités efficaces des composés de formules (1) et (2) tels que définis dans la revendication 1.

7. Une méthode selon la revendication 6, dans laquelle le rapport en poids desdits composés est tel que défini dans la revendication 2 ou la revendication 3.

8. Une méthode selon la revendication 7, dans laquelle la somme des poids desdits composés de formules (1) et (2) se situe dans l'intervalle de 1500 à 3000 g/ha.

9. Une méthode selon la revendication 8, dans laquelle ladite somme se situe dans l'intervalle de 2300 à 2800 g/ha.

10. Une méthode selon l'une quelconque des revendications 6 à 9, dans laquelle lesdits composés de formules (1) et (2) sont appliqués séparément, mais à peu près simultanément pour effectuer leur application concomitante.
